# EUROPEAN PATENT APPLICATION

(11) **EP 4 513 968 A1**
(43) Date of publication of application: **26.02.2025**
(21) Application number: 23791548.3
(22) Date of filing: 03.03.2023
(51) Int. Cl.: H04W 40/34, H04W 40/12, H04W 84/22, H04W 92/20

(54) **COMMUNICATION CONTROL DEVICE, COMMUNICATION DEVICE CONTROL METHOD, AND PROGRAM**

(30) Priority: 18.04.2022 JP 2022068465
(71) Applicant: CANON KABUSHIKI KAISHA, Tokyo 146-8501 (JP)
(72) Inventor: HORIO, Daisuke, Tokyo 146-8501 (JP)
(74) Representative: Canon Europe Limited
(86) International application number: PCT/JP2023/007944
(87) International publication number: WO 2023/203893

(57) **Abstract**

A communication control apparatus for an Integrated Access and Backhaul (IAB) network detects that a first relay node communicating with a base station of the network over a first communication path no longer fulfills requirements for communication in a specific slice, and provides an instruction to connect to a second relay node that is located on a second communication path fulfilling the requirements for communication in the specific slice and is connectable from the first relay node, in accordance with a result of the detection.

## Description

### TECHNICAL FIELD

The present invention relates to a communication control apparatus, a method for controlling a communication apparatus, and a program.

### BACKGROUND ART

The Third Generation Partnership Project (3GPP (registered trademark)) has developed the standardization of Integrated Access and Backhaul (IAB) as a communication technology for backhaul. The IAB technology simultaneously uses millimeter-wave radio communication in the 28-GHz band, which is used for access communication between base stations and user equipments (UEs), also as backhaul communication (PTL 1).

In a backhaul communication network (hereinafter referred to as "IAB network") that uses the IAB technology, relay devices called IAB nodes relay communication from an IAB donor, which is equivalent to a conventional base station, to a destination UE. In case the radio communication conditions between the IAB donor and the IAB nodes in the IAB network are degraded, it has been studied to restore and improve the communication conditions by switching a communication path or forming a plurality of communication paths (hereinafter referred to as "multi-path"). In the IAB network, the Backhaul Adaptation Protocol (BAP) is used in communication between the IAB donor and the IAB nodes and between the IAB nodes. The BAP is defined as a protocol mainly for routing communication packets between a plurality of IAB nodes.

### CITATION LIST

### PATENT LITERATURE

PTL 1: Japanese Patent Laid-Open No. 2019-534625

### SUMMARY OF INVENTION

### TECHNICAL PROBLEM

Here, studies have been conducted on the introduction of the concept of network slicing, which, in next-generation public networks, virtually provides network slices (hereinafter referred to as "slices") that meet the requirements and conditions of a plurality of different services on a common network. The slice types defined include high speed/large capacity (eMBB), low latency (URLLC), and simultaneous multiple access (mMTC). "eMBB" is an abbreviation of "enhanced Mobile BroadBand". "URLLC" is an abbreviation of "Ultra-Reliable and Low Latency Communication", and "mMTC" is an abbreviation of "massive Machine Type Communication". For example, a mechanism is being examined in which a UE makes a request for a specific network slice, and a CN (Core Network) over a base station responds to perform communication using the requested network.

In the IAB network, an IAB node that fulfilled requirements for communication in a slice may no longer be able to provide communication that fulfills those requirements due to changes in the processing load or communication environment of the IAB donor and IAB nodes of higher-order connection. In such cases, UEs cannot continue communication in that slice.

The present invention has been made in view of the foregoing problem, and aims to provide communication in a slice requested by a UE when requirements for communication in the slice become unfulfillable in an Integrated Access and Backhaul (IAB) network.

### SOLUTION TO PROBLEM

To address the above problem, a communication control apparatus according to the present invention is
a communication control apparatus for an Integrated Access and Backhaul (IAB) network, the apparatus characterized by including:
detection means for detecting that a first relay node communicating with a base station of the network over a first communication path no longer fulfills requirements for communication in a specific slice; and
instruction means for providing an instruction to connect to a second relay node that is located on a second communication path fulfilling the requirements for communication in the specific slice and is connectable from the first relay node, in accordance with a result of the detection performed by the detection means.

### ADVANTAGEOUS EFFECTS OF INVENTION

According to the present invention, it is possible to provide communication in a slice requested by a UE when requirements for communication in the slice become unable to be fulfilled in an Integrated Access and Backhaul (IAB) network.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example of a radio communication system.
FIG. 2 is a hardware functional block diagram of a communication apparatus.
FIG. 3 is a software functional block diagram of the communication apparatus.
FIG. 4 is a flowchart illustrating a method for determining a new connection destination according to Embodiment 1.
FIG. 5 shows an example of a connection candidate list of an IAB node 105 according to Embodiment 1.
FIG. 6A shows examples of NSSAI lists of an IAB donor 101 and IAB nodes 102 to 105 according to Embodiment 1.
FIG. 6B shows examples of NSSAI lists of the IAB donor 101 and the IAB nodes 102 to 105 according to Embodiment 1.
FIG. 7 is a sequence diagram illustrating establishment of a multi-path connection according to Embodiment 1.
FIG. 8 is a diagram showing a topology after a new communication path has been connected according to Embodiment 1.
FIG. 9 is a flowchart for determining a new communication path at the IAB donor according to Embodiment 2.
FIG. 10 shows an example of a connection candidate list of the IAB 104 according to Embodiment 2.
FIG. 11 shows examples of NSSAI lists of the IAB donor 101 and the IAB nodes 102 to 105 according to Embodiment 2.
FIG. 12 is a diagram showing a topology after a new communication path has been connected according to Embodiment 2.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

In backhaul communication using the IAB technology, relay devices (relay nodes) called IAB nodes relay communication from an IAB donor, which is equivalent to a conventional base station, by means of millimeter wave communication. An IAB node can form communication links with a plurality of other IAB nodes to form a network with an IAB donor as a starting point, thereby expanding the network area.

In the IAB technology, the Backhaul Adaptation Protocol (BAP) is used to perform control between the IAB donor and the IAB nodes and between the IAB nodes. The BAP is defined as a protocol for routing data between the IAB donor and the IAB nodes. In case the radio communication conditions between the IAB donor and the IAB nodes are degraded in backhaul communication using the IAB technology, it has been studied to restore and improve the communication conditions by switching a communication path or forming a plurality of communication paths (hereinafter referred to as "multi-path connection"). For example, study has been conducted on a mechanism in which network slices provided by a base station are notified, each UE selects or requests a network slice in accordance with its purpose, and the IAB donor responds to enable the UE to use the selected or requested network slice.

Here, in the case where the IAB donor provides slices to UEs, requirements (slice requirements) are defined for communication in specific slices. Slice requirements include, for example, communication speed (throughput), packet loss rate, and round-trip delay. There are slice requirements with different parameters depending on the slice type. In such cases, there may be a situation where the IAB donor fulfilled slice requirements when it initially provided communication in a slice to a UE, but becomes unable to fulfill the slice requirements due to a communication link failure or variations in the processing load of the IAB node. In such cases, the UE cannot fulfill the requirements for communication in the slice.

To address this, if it is detected that communication in a specific communication path provided to a specific UE no longer fulfills the requirements, a communication control apparatus according to the present embodiment instructs a relay node on a specific communication path to connect to a communication path that fulfills the requirements.

### Embodiment 1

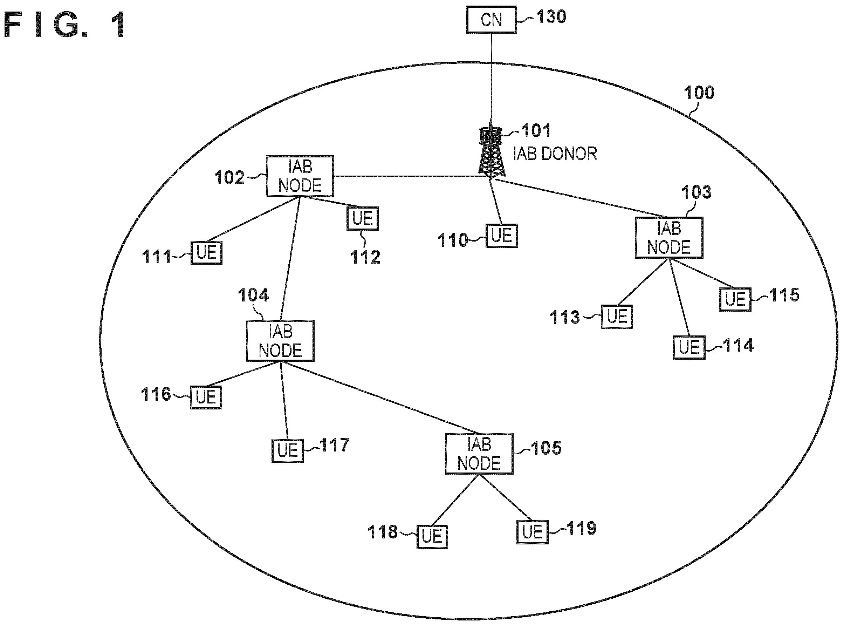

FIG. 1 is a diagram showing an example of a radio communication system according to the present invention. A radio communication system 100 shown in FIG. 1 includes an IAB donor 101 that provides connection to a CN 130, and IAB nodes 102 to 105 (hereinafter also referred to as "IAB nodes" without distinction). The radio communication system 100 is a network (IAB network) in which communication is performed using the Backhaul Adaptation Protocol (BAP). The IAB donor 101 provides a connection to the CN 130 via the IAB nodes and a backhaul link. The IAB nodes provide UEs with a connection to the IAB donor 101 over an access link. In the radio communication system 100, New Radio (NR) communication is used on both the backhaul link and the access link in the network. The IAB donor 101 forms an IAB network (NR backhaul network) that includes the IAB nodes. Here, "CN" is an abbreviation of "Core Network" and is responsible for various types of processing, such as authentication of UEs 110 to 118 (hereinafter also referred to as "UEs" without distinction), which are user equipments, and registration of use of network slices (slices).

The IAB donor 101 is an example of a base station device that centrally controls the IAB nodes and forms its coverage area. In the description of the present embodiment, the IAB donor 101 is a communication control apparatus that performs the above-described communication control. However, the functionality of the communication control apparatus may be provided in the IAB nodes, a network node of the core network, or a device different from the IAB nodes and the IAB donor 101 in the radio communication system 100.

The IAB donor 101 determines for each IAB node the type of network slice that can be supported by the IAB node, and assign the determined type to the IAB node. Also, assume that the IAB donor 101 manages information regarding slices supported by each IAB node as an NSSAI list. Here, "NSSAI" is an abbreviation of "Network Slice Selection Assistance Information". If any of the slices supported by the IAB nodes 102 to 105 changes, the IAB donor 101 is notified of the change by means of a BAP control message.

The IAB donor 101 and the IAB nodes function as communication apparatuses as described below, and each communication apparatus in the following description is either the IAB donor 101 or any of the IAB nodes.

Assume that a BAP control message refers to a message transmitted and received in accordance with a BAP control Protocol Data Unit (PDU) format. The notification may be provided using a PDU type field as control information, or any other Reserved field may be used.

In the radio communication system 100, when each UE receives a service provided by the CN 130, packets from the CN 130 are downlinked to the UE via the IAB donor 101. Meanwhile, in an uplink, packets from each UE are similarly transmitted to the CN 130 via the IAB donor 101.

Here, packets conforming to the format of BAP data Protocol Data Unit (PDU) (hereinafter also referred to as "BAP data packets") are transmitted in the radio communication system 100. For example, an Internet Protocol (IP) packet that is from the CN 130 and addressed to the UE 118 is converted into a BAP data packet at the IAB donor 101 and transferred into the IAB network 100. The transferred BAP data packet is relayed by the IAB nodes 102 to 105, converted again into an IP packet at the IAB node 105, and delivered to the destination UE 118. Similarly, an IP packet from the UE 118 is converted into a BAP data packet at the IAB node 105, transmitted via the IAB network 100 and converted again into an IP packet at the IAB donor 101, and transferred to the CN 130.

Assume that the UEs 110 to 119 (hereinafter also referred to as "UEs" without distinction) are executing applications using desired slices provided by the IAB nodes. The slice types defined include high speed/large capacity (eMBB), low latency (URLLC), and simultaneous multiple access (mMTC), as mentioned above. For example, the UE 118 is executing an application that requires the MIoT slice, and the UE 119 is executing an application that requires eMBB.

Here, assume that in the radio communication system 100 shown in FIG. 1, radio quality has degraded in a communication path between the IAB nodes 104 and 105, and a link failure has occurred. In this case, the IAB node 105 no longer fulfills the requirements (slice requirements) for communication in a slice, and an error may occur in the application executed by the UE 119. The present embodiment assumes that slice requirements for eMBB are not fulfilled here. In this case, the IAB node 105 detects that it has become unable to fulfill the slice requirements for eMBB, and notifies the IAB donor 101 that it no longer fulfills the slice requirements (non-fulfillment of requirements), by means of a BAP control message. In one example, the IAB node may notify the IAB donor 101 of a change in the NSSAI by means of a BAP control message. The IAB node 105 may detect non-fulfillment of slice requirements based on occurrence of an eMBB slice request from the UE 119, or may make determination on its own based on the quality of a signal from the IAB node 104 that is periodically measured by means of RRM. "RRM" is an abbreviation of "Radio Resource Management".

For example, non-fulfillment of slice requirements at the IAB node 104 may be detected based on occurrence of an eMBB slice request signal from the UE 119, or may be determined by the IAB node 104 itself based on the quality of a signal from the IAB node 102 that is periodically measured by means of RRM.

In the following, a method is described by which the IAB donor 101 acting as the communication control apparatus determines a connection destination to form a new the communication path in order to recover the slice for which the slice requirements are no longer fulfilled at the IAB node 105.

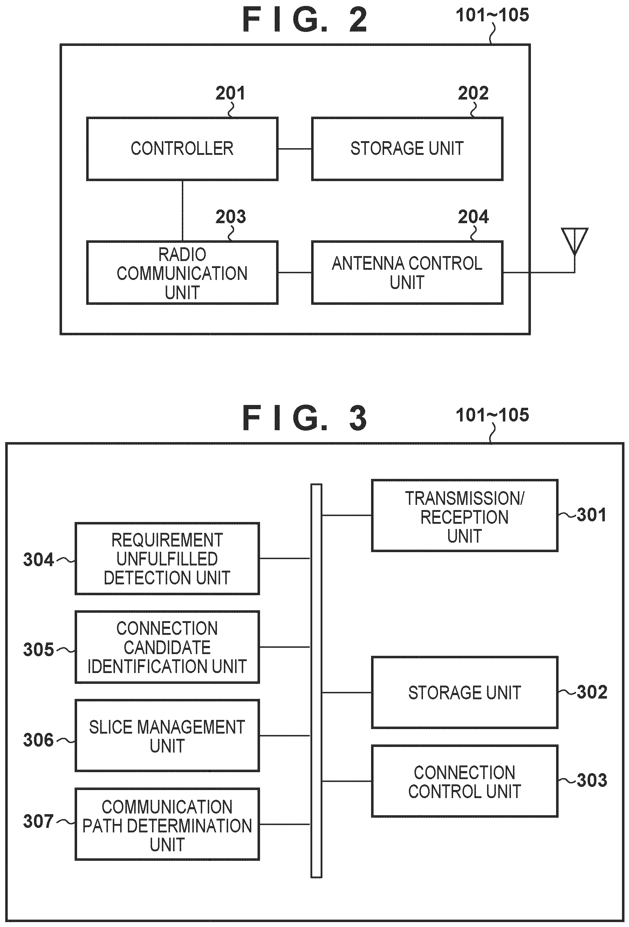

FIG. 2 is a hardware block diagram of the communication apparatus according to the present embodiment. The communication apparatus is constituted by pieces of hardware including a controller 201, a storage unit 202, a radio communication unit 203, and an antenna control unit 204.

The controller 201 controls the entire apparatus by executing a control program stored in the storage unit 202. In one example, the controller 201 includes a processor that loads the control program into a memory and executes the loaded program. The storage unit 202 stores the control program to be executed by the controller 201. The storage unit 202 of the IAB donor 101 also stores various types of information such as information regarding cell IDs and connected UEs, and routing information regarding the IAB nodes 102 to 105.

The radio communication unit 203 is for performing cellular network communication such as Long Term Evolution (LTE) or 5G (fifth-generation mobile communication system) conforming to the 3GPP (registered trademark) standard. The radio communication unit 203 is capable of measuring conditions of communication with the IAB nodes and the UEs in accordance with RRM, and is capable of providing notification to the IAB donor 101 and the IAB nodes 102 to 105 by means of RRC. "RRC" is an abbreviation of "Radio Resource Control". An RRC message has functions such as connection establishment between the IAB nodes 102 to 105 and the UEs 110 to 119, admission control, RRC status management, and notification of surrounding cell information and access restrictions. Assume that received reference signal power, received reference signal quality, and the like of adjacent cells can be obtained as communication conditions that can be measured by means of RRM, which is a function of RRC.

The antenna control unit 204 controls an antenna used for radio communication performed by the radio communication unit 203. Note that the number of controllers 201, the number of storage units 202, the number of radio communication units 203, and the number of antenna control units 204 may be more than one in a single communication apparatus. The communication apparatus may also include constituent units that are commonly provided in a base station equipment, such as a wired communication unit.

FIG. 3 is a software functional block diagram of the communication apparatus according to the present invention. The software functional blocks are stored in the storage unit 202 and realized as a result of being executed by the controller 201. The software functional blocks include a transmission/reception unit 301, a storage unit 302, a connection control unit 303, a requirement unfulfilled detection unit 304, a connection candidate identification unit 305, a slice management unit 306, a communication path determination unit 307.

The transmission/reception unit 301 controls the radio communication unit 203 via the controller 201, and performs cellular network communication conforming to the 3GPP (registered trademark) standard, such as LTE or 5G, with the IAB nodes 102 to 105 and the UEs 110 to 119. The storage unit 302 controls and manages the storage unit 202, and stores programs executed by the controller 201, such as an operating system of the communication apparatus. The storage unit 302 stores and holds the network topology of the IAB network 100, routing information regarding the IAB nodes 102 to 105, information related to the UEs 110 to 119, and the like. The connection control unit 303 controls the antenna control unit 204 via the controller 201 during radio communication.

The requirement unfulfilled detection unit 304 detects that the IAB node has become unable to fulfill slice requirements (non-fulfillment of requirements). For example, the requirement unfulfilled detection unit 304 can compare an NSSAI list received from the IAB node with an NSSAI list managed by the slice management unit 306, and detect non-fulfillment of requirements based on a change in the slice type included in the list. Alternatively, when a slice request for a specific slice is received again from a UE that has already been assigned to that slice, it is possible to detect that the IAB node to which the UE is connected does not fulfill the requirements. The requirement unfulfilled detection unit 304 that has detected non-fulfillment of requirements notifies the communication path determination unit 307 and updates the slice management unit 306.

The connection candidate identification unit 305 manages connection candidates that can be connected from each IAB node, and identifies IAB nodes (connection candidate nodes) that can be connected from a specific IAB node.

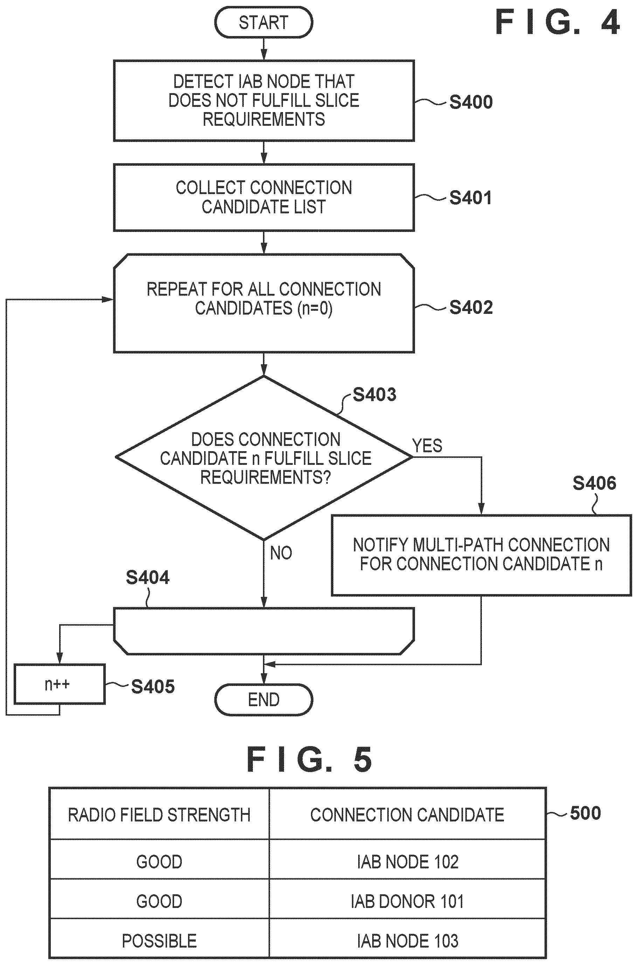

In one example, the connection candidate identification unit 305 collects and manages a list of connection candidate IAB nodes from each IAB node. For example, the IAB donor 101 transmits a request signal for the connection candidate list to a specific IAB node. Upon receiving the request signal, the IAB node transmits a response including the connection candidate list stored in the storage unit 302. A method by which the IAB node creates and updates the connection candidate list will be described later with reference to FIG. 5. In another example, the IAB node that has received the request signal may update the connection candidate list and transmit a response including the updated connection candidate list.

The slice management unit 306 stores and manages the NSSAI lists of slices supported by the respective IAB nodes that are obtained from the IAB nodes by means of a BAP control message.

In response to the notification from the requirement unfulfilled detection unit 304, the communication path determination unit 307 references the connection candidate list of the IAB node regarding which non-fulfillment of requirements has been detected, and slice information regarding the communication apparatus and each IAB node, and determines a communication path with a new connection destination that enables the recovery of the IAB node regarding which non-fulfillment of the requirements has been detected. The determined new connection destination is notified to the IAB node regarding which non-fulfillment of requirements has been detected, by means of an RRC control message. Here, the RRC control message is a message conforming to the PDU format defined by RRC, and is realized using any of the fields that indicate functions of RRC. The notification given to the IAB node by means of the RRC control message may be made with Neighbor Cell List (NCL) of only the new connection destination.

Although the functional blocks of a communication control apparatus have been described here, the other communication apparatuses also have the same configurations except for the requirement unfulfilled detection unit 304, the connection candidate identification unit 305, and the communication path determination unit 307.

FIG. 4 is a flowchart illustrating a method for determining a new connection destination that is performed by the communication control apparatus according to Embodiment 1. This flowchart may start when the IAB donor 101 acting as the communication control apparatus receives a BAP control message. In the description of this processing example, the quality of radio communication over the communication path between the IAB nodes 104 and 105 has degraded and a link failure has occurred in the network topology shown in FIG. 1, resulting in the IAB node 105 being unable to fulfill the eMBB requirements.

In step S400, the requirement unfulfilled detection unit 304 of the IAB donor 101 detects, based on the received RRC control message, that the IAB node 105 no longer fulfills the slice requirements. The requirement unfulfilled detection unit 304 instructs the connection candidate identification unit 305 to identify connection candidate nodes for the IAB node 105 that no longer fulfills the slice requirements.

In step S401, the connection candidate identification unit 305 identifies connection candidates by collecting the connection candidate list via an RRC control message. Assume that in step S401, the IAB donor 101 transmits a transmission request for the connection candidate list to the IAB node 105, and the IAB node 105 transmits a request response including the connection candidate list in response to the transmission request. However, the connection candidate identification unit 305 may alternatively identify the connection candidate nodes by retrieving the connection candidate list stored in the storage 302, or may transmit a transmission request for the connection candidate list to an IAB node other than the IAB node 105.

Processing in steps S402 to S411 is repeated for all of the IAB nodes (in this example, the IAB nodes 102 and 103) included in the connection candidate list of the IAB node 105 that does not fulfill the slice.

In step S403, the NSSAI list for a connection candidate node n that is managed by the slice management unit 306 is referenced, and it is determined whether the connection candidate node n fulfills the eMBB slice requirements. If the requirements are fulfilled (Yes in S403), step S406 is executed. If not (No in S403), step S405 is executed and the determination in step S403 is performed for the next connection candidate node n.

In step S406, the IAB node 105 is notified that multi-path connection is to be performed with the connection candidate node n, by means of an RRC control message. The RRC control message transmitted in step S406 includes identification information regarding the connection candidate node n. The IAB node 105 that has received the notification can thus transmit a connection request to the connection candidate node n. Here, assume that the connection candidate node n has established a communication path with the IAB donor 101, and this communication path fulfills the slice request. The IAB node 105 can connect to the communication path that fulfills the slice request by transmitting the aforementioned connection request to the connection candidate node n.

In step S406 in another example, the connection candidate node n may alternatively be notified of an update of the communication path. For example, the connection candidate node n may be instructed to update the communication path by transmitting, to the connection candidate node n, identification information regarding the IAB node 105 in association with an identifier of the communication path.

The IAB node 105 that has received the notification of multi-path connection from the IAB donor 101 connects to the IAB nodes 102 and 103, which are the new connection destinations, and is provided with eMBB. Here, the IAB node 105 may perform a reconnection operation in accordance with Cell ReSelection according to the RRC protocol only for a subnet of a specific slice (eMBB).

In the description of the example shown in FIG. 4, the IAB node 105 maintains connection to the IAB node 104, and the UE 118 continues to perform communication in the MIot slice. In one example, the IAB node 105 may disconnect from the IAB node 104 and connect to a new connection destination IAB node. In this case, in step S406, the IAB donor 101 may instruct the IAB node 105 to switch connection (handover) from the IAB node 104. That is, it is sufficient in step S406 to provide an instruction to connect to the connection candidate node n that fulfills the slice requirements, and whether or not the IAB node 105 performs multi-path connection can be changed as needed.

For example, the IAB donor 101 may instruct the IAB node 105 to disconnect from the IAB node 104 if the IAB node 102, which is the new connection destination, fulfills all requirements for communication in the slice to be supported by the IAB node 105. In this case, the IAB donor 101 may also instruct the IAB node 105 to perform communication in the slice to be supported, over the communication path with the IAB node 102.

In another example, if the IAB node 102, which is the new the connection destination, is located on a communication path that has already been established by the IAB node 105, the IAB donor 101 may instruct the IAB donor 105 to disconnect from the communication path previously established by the IAB node 105. For example, the IAB node 105 is already in communication with the IAB donor 101 via the IAB nodes 102 and 104. Here, if the IAB node 102 is determined as a new connection destination, the path connecting the IAB donor 101, the IAB node 102, and the IAB node 104 includes the new communication path, namely the communication path connecting the IAB donor 101 and the IAB node 102. In this case, the already established communication path takes the same route as the new communication path, and the new communication path thus needs to fulfill the requirements of the slice to be supported by the IAB node 105. In this case as well, the IAB donor 101 may cause the IAB node 105 to disconnect from the IAB node 104 and switch the communication path such that the IAB node 105 perform communication in the slice to be supported by the IAB node 105 over the new communication path.

FIG. 5 shows an example of a connection candidate list of the IAB donor 105 according to Embodiment 1. The connection candidate list 500 is created as a result of each of the IAB nodes 102 to 105 generating a connection candidate list as neighboring cell information based on the RRM measurement results, and the connection candidate identification unit 305 of the IAB donor 101 collecting and managing the thus-generated connection candidate lists via an RRC control message. As another method, the IAB donor 101 may collect the RRM measurement results at the IAB nodes 102 to 105 by means of an RRC protocol control message, and generate the connection candidate list 500 by listing the IAB nodes in descending order of radio field strength, for example.

Alternatively, the IAB donor 101 may collect and use NCLs as connection candidate lists of the IAB nodes. In the connection candidate list 500 shown in FIG. 5, the IAB node 102 has the highest radio field strength among the connection candidate IAB nodes for the IAB node 105. That is, it is determined that the IAB node 102 has the highest communication quality among the connection candidate nodes.

Next, examples of the NSSAI lists of the IAB donor 101 and the IAB nodes 102 to 105 are illustrated, and a description is given of processing for determining in the processing in step S403 whether the IAB node 102 fulfills the slice requirements.

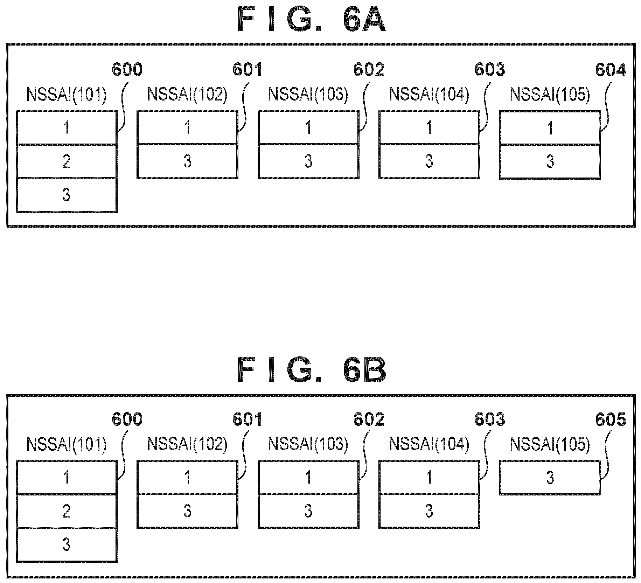

FIGS. 6A and 6B show examples of the NSSAI lists for the IAB donor 101 and the IAB nodes 102 to 105 according to Embodiment 1.

FIG. 6A shows the NSSAI lists of the IAB donor 101 and the IAB nodes before a communication link failure occurs among the IAB nodes in the radio communication system 100 shown in FIG. 1.

An NSSAI list 600 is an example of slice support information regarding the IAB nodes that can be connected from by the IAB donor 101. NSSAI lists 601 to 604 are examples of slice support information regarding the IAB nodes 102 to 105 that is managed by the slice management unit 306. Here, 604 denotes the NSSAI list of the IAB node 105 before being updated due to slice non-fulfillment detected from the IAB node 105.

Each value in NSSAI indicates the Slice Service Type (SST), namely a supportable slice type, and the values 1, 2, and 3 indicate eMBB, URLLC, and MIoT, respectively.

For example, the IAB donor 101 supports all of the slice types eMBB, URLLC, and MIot, as indicated by the NSSAI list 600. The IAB nodes 102 to 105 support eMBB and MIot SSTs, as indicated by the NSSAI lists 601 to 604. Here, a specific IAB node supporting a specific slice type means that the IAB node can fulfill requirements for communication in the specific slice over a communication path between the specific IAB node and the IAB donor 101. This means that, for example, when the IAB node 102 newly receives an eMBB slice request, the IAB node 102 has a communication path that fulfills the requirements for eMBB communication.

Here, a communication link failure occurs between the IAB nodes 104 and 105. The IAB node 105 is affected by the communication link failure, becomes unable to provide eMBB, and then supports only the MIot SST. Thus, the updated NSSAI list of the IAB node 105 shown in FIG. 6B only includes "3" indicating MIoT. Here, 605 denotes the NSSAI list of the IAB node 105 after being updated due to slice non-fulfillment detected from the IAB node 105 in step S400.

The IAB node 102, which is a connection destination candidate, supports eMBB as indicated by 601. The IAB donor 101 thus selects the IAB node 102 as a new connection destination of the IAB node 105.

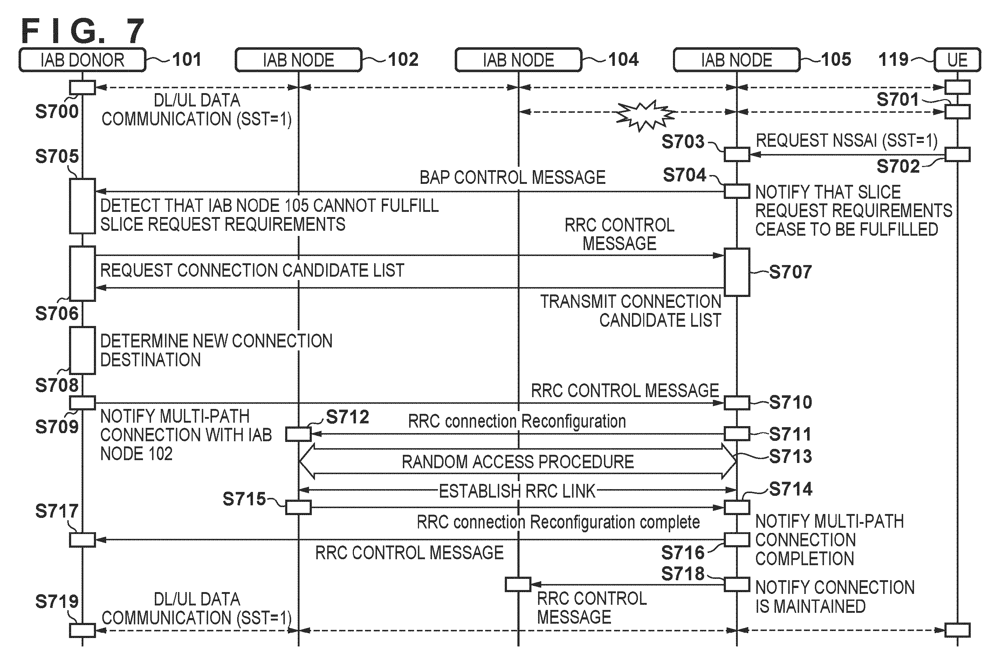

FIG. 7 is a sequence diagram illustrating establishment of multi-path connection that is performed by the radio communication system 100 according to Embodiment 1. FIG. 7 illustrates an operation to establish a multi-path connection to the IAB node 102 over a new communication path in order to recover eMBB that the IAB node 105 has become unable to support due to the communication link failure.

In step S700, the UE 119 performs communication of an application requesting eMBB. Here, the UE 119 is in communication in a slice whose slice type is eMBB via the IAB node 105, which is directly connected to the IAB node 104 and in communication with the IAB donor 101 via the IAB nodes 104 and 102. In step S700, no communication link failure has occurred between the IAB nodes 104 and 105, and the IAB node 105 fulfills the requirements for eMBB communication requested by the UE 119.

Here, in step S701, a failure occurs on a radio link between the IAB nodes 105 and 104, the packet loss rate on the radio link increases, and the requirements of throughput, packet loss rate, round-trip delay, or the like required for communication are no longer fulfilled. Assume here that the throughput for supporting eMBB is no longer ensured. Then, the UE 119 that detects in step S702 that the eMBB requirements are no longer fulfilled due to the link failure again makes, based on NSSAI, a request for a slice supporting eMBB to the IAB node 105.

In step S703, it is detected the IAB node 105 has become unable to fulfill eMBB in response to the NSSAI request from the UE 119.

In step S704, the IAB node 105 notifies the IAB donor 101 of a change in NSSAI regarding slices that can be supported by the IAB node 105, by means of a BAP control message. In step S705, the IAB donor 101 that has received the BAP control message from the IAB node detects that the IAB node 105 has become unable to fulfill the eMBB slice.

In step S706, the IAB donor 101 makes a request for the connection candidate list to the IAB node 105, by means of an RRC control message. In step S707, the IAB node 105 transmits the connection candidate list generated based on the RRM measurement results to the IAB donor 101 by means of an RRC control message.

In step S708, the IAB donor 101 determines the IAB node 102 as a new connection destination according to the flowchart shown in FIG. 4, based on the connection candidate list of the IAB node 105 and the NSSAI lists managed by the slice management unit 306.

In steps S709 and S710, the IAB donor 101 notifies the IAB node 105 of multi-path connection with the IAB node 102, by means of an RRC control message. Here, the IAB node 102 may be specified as a connection destination by means of NCL defined by the RRC protocol. In steps S711 and S712, the IAB node 105 transmits an RRC connection Reconfiguration message to form an RRC link with the IAB node 102. In step S713, a random access procedure is executed in accordance with the RRC protocol, and an RRC link is established between the IAB nodes 105 and 102. In steps S714 and S715, the IAB node 102 transmits an RRC connection Reconfiguration complete message to the IAB node 105.

In steps S716 and S717, the IAB node 105 notifies the IAB donor 101 of completion of the multi-path connection, by means of an RRC control message.

In step S718, the IAB node 105 notifies the IAB node 104 that their connection is maintained, by means of an RRC control message instead of an RRC Release message that is transmitted when a communication path is switched. Although a message for when a communication path defined by RRC is changed is used to establish an RRC link here, there is no limitation thereto and any other message may be used. In the above description, each control message is transmitted and received by means of BAP and RRC, but this need not necessarily be the case. For example, the control messages may be controlled by transmitting and receiving an application-layer message.

As a result of the above, the IAB node 105 can support communication in a slice whose slice type is eMBB that is requested by the UE 119, as indicated by step S719.

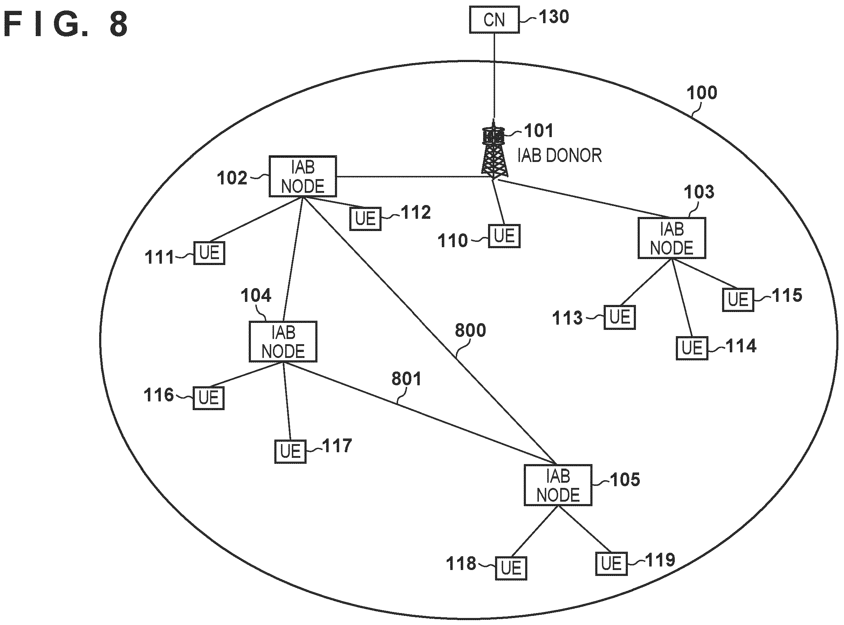

FIG. 8 is a diagram showing a topology of the IAB network after the new communication path has been established according to Embodiment 1. After the sequence shown in FIG. 7 has been executed in the radio communication system 100, the IAB node 105 establishes multi-path connection using a path 800 to the IAB node 102 and a path 801 to the IAB node 104. The IAB node 105 can provide the UE 119 with communication in a slice supporting eMBB using the path 800 to the IAB node 102. Further, the IAB node 105 can continue to maintain the communication path to the IAB node 104 and provide communication in a slice supporting MIot requested by the UE 118.

As described above, when an IAB node becomes unable to fulfill requirements of a specific slice, the IAB donor 101 instructs the IAB node to establish a communication path to a new connection destination that supports the slice. This makes it possible to recover the slice whose requirements are no longer fulfilled.

### Embodiment 2

In Embodiment 1, a description has been given of the method of determining a new connection destination when a link failure occurs between the IAB nodes 105 and 104 in the radio communication system 100 shown in FIG. 1.

In Embodiment 2, a description will be given of a method by which, when a communication link failure occurs between the IAB nodes 104 and 102 shown in FIG. 1, a new connection destination is determined to recover the eMBB slice type requested by the UEs 117 and 119. Note that the same configurations, functions, and processing as those of Embodiment 1 are assigned the same reference numerals, and a detailed description thereof is omitted.

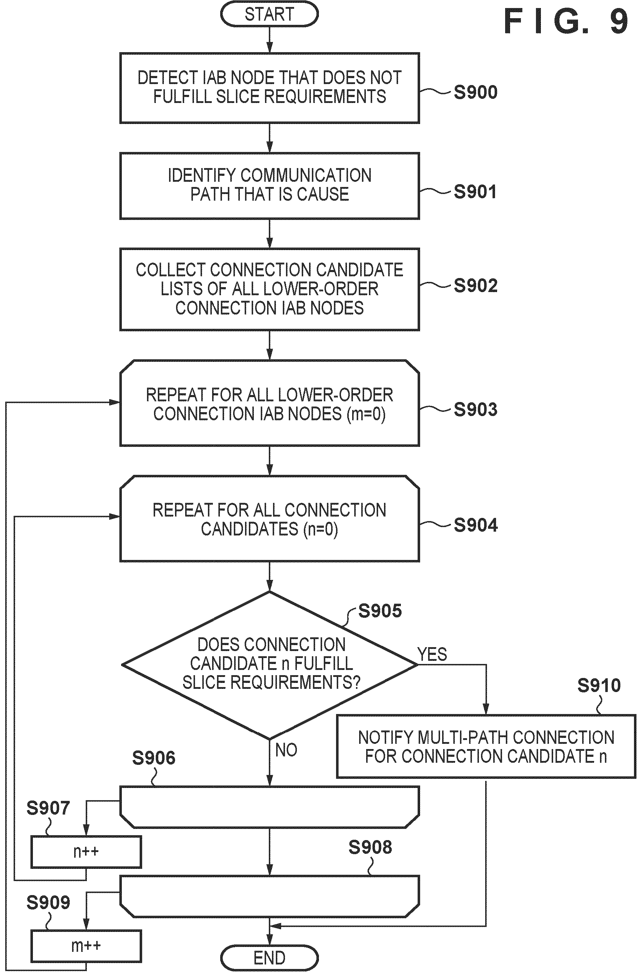

FIG. 9 is a flowchart for determining a new communication path that is executed by the IAB donor 101 according to Embodiment 2. Processing in FIG. 9 may be started when the IAB donor 101 receives a BAP control message.

In step S900, the IAB donor 101 detects an IAB node that does not fulfill slice requirements. In this example, the IAB donor 101 receives a BAP control message indicating a change in NSSAI regarding supportable slices from the IAB nodes 104 and 105, and detects that the IAB nodes 104 and 105 do not fulfill slice requirements.

In step S901, the IAB donor 101 determines that a link failure has occurred between the IAB nodes 104 and 102 based on routing information stored in the storage unit 202 and hop counts of the IAB 104 and 105.

In step S902, the IAB donor 101 collects the connection candidate lists of the IAB node 104 and an IAB node of lower-order connection, namely the IAB node 105.

Processing in steps S903 to S908 is repeatedly performed for the IAB nodes that do not fulfill the slice requirements in descending order of the hop count to the IAB donor 101.

Processing in steps S904 to S906 is repeatedly performed for each connection candidate for a specific IAB node. In step S905, the IAB donor 101 determines whether or not the connection candidate n for the IAB node fulfills the slice requirements. If the requirements are fulfilled (Yes in S905), step S910 is executed. If not (No in S905), processing proceeds to step S906.

Note that in step S905, the IAB donor 101 may determine whether or not the slice requirements for communication in slices requested by the UEs 116 to 119 that are connected to the IAB nodes 104 and 105 are fulfilled. In another example, the IAB donor 101 may only determine whether or not the slice requirements for communication in slices requested by the UEs 116 and 117 that are connected to the IAB node 104 are fulfilled. In this case, the IAB donor 101 may also execute processing in steps S903 to S908 for the IAB node 105 after giving the IAB node 104 an instruction of a relay node that is a new connection destination. That is, a communication path with a new connection destination may be individually determined for the IAB nodes 104 and 105 regarding which non-fulfillment of the slice requirements has been detected.

In step S906, if processing in step S905 has been performed for all of the connection candidates, the processing proceeds to step S908. If not, the processing proceeds to step S907, where processing in step S905 is performed for the next connection candidate. If, in step S908, processing in steps S904 to S906 has been performed for all of the IAB nodes that do not fulfill the slice requirements, the processing shown in FIG. 9 ends. If, in step S908, an IAB node remains that does not fulfill the slice requirements and has not subjected to processing in steps S904 to S906, the processing proceeds to step S909, and processing in steps S904 to S906 is performed for the IAB node 105 that is the next connection candidate n.

In step S910, the IAB donor 101 transmits to the IAB node an instruction to make a multi-path connection with the connection candidate n, by means of an RRC control message.

In this processing example, if no IAB node is present that is a connection candidate node connectable from the IAB node 104 and fulfills the slice requirements, an IAB node that is a connection candidate node connectable from the IAB node 105 and fulfills the slice requirements is determined. If it is determined that a connection candidate node is present that is connectable from the IAB node 105 and fulfills the slice requirements, the IAB node 105 is instructed to connect to this IAB node. Here, the IAB node 104 may also be instructed to perform communication over the communication path that is newly established by the IAB node 105. This makes it possible to recover not only the IAB node 104 but also the slice to be supported by the IAB node 104.

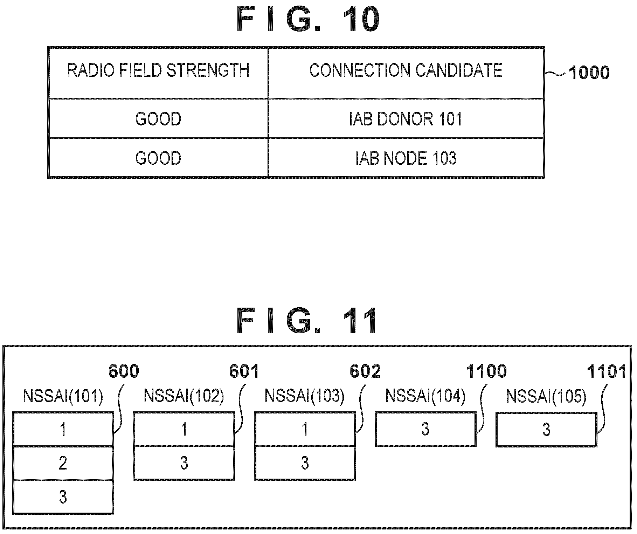

FIG. 10 shows an example of a connection candidate list of the IAB donor 104 according to Embodiment 2. Note that the connection candidate list of the IAB node 105 is the same as that of Embodiment 1 shown in FIG. 5.

FIG. 11 shows updated NSSAI lists of the IAB nodes after a communication link failure has occurred between the IAB nodes 102 and 104, and slice non-fulfillment has been detected from the IAB nodes 104 and 105 in step S900.

NSSAI lists 1100 and 1101 have been updated in response to NSSAI change notification from the IAB nodes 104 and 105, which no longer support eMBB.

In the connection candidate list 1000, the IAB node 104 receives the highest radio field strength from the IAB donor 101 among the connection candidates for the IAB node 104. Further, the IAB donor 101 can provide eMBB based on S600. Thus, in step S905, the IAB donor 101 is selected as a connection destination of the IAB node 104. Here, IAB nodes included in the connection candidate list 1000 are limited to nodes of higher-order connection and have smaller hop counts than those of the IAB nodes 104 and 105, or IAB nodes that are not on a path to the IAB donor 101 (i.e., IAB nodes that are not higher or lower-order connection). In response to this, the IAB donor 101 instructs the IAB node 104 to connect to the IAB donor 101 in step S910, and ends the processing in FIG. 9.

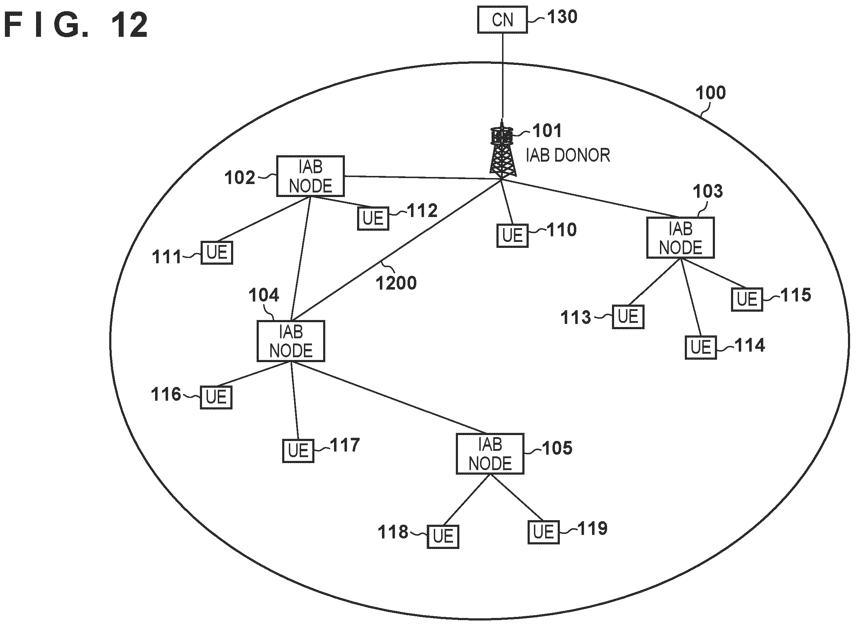

FIG. 12 shows a topology of the IAB network after a new communication path has been connected according to Embodiment 2.

In the radio communication system 100, a connection between the IAB donor 101 the IAB node 104 over a path 1200 is established according to the flowchart in FIG. 9. This allows the IAB node 104 to perform communicate in a slice supporting eMBB. Further, the IAB node 104 can support the eMBB slice type, thereby allowing the IAB node 105 to also support eMBB. This can resolve non-fulfillment of the slice requirements by the IAB node 105. This makes it possible to provide communication in a slice supporting eMBB to the UEs 117 and 119.

In the description of the present embodiment, non-fulfillment of slice requirements by the IAB node 105 can be resolved by establishing the path 1200. However, if non-fulfillment of slice requirements by the IAB node 105 cannot be resolved even though the path 1200 is established, a BAP control message is transmitted again from the IAB node 105 to the IAB donor 101. In this case, the IAB donor 101 again instructs the IAB node 105 to make a multi-path connection in order to fulfill the slice requirements.

### Other Embodiments

Multi-path connection has been described in Embodiments 1 and 2. However, if Redio Link Failure (RLF) is notified instead of degradation of communication quality as a BAP control message, the communication path may be switched to a newly determined connection destination. Note that the switching procedure is performed in the same manner as when making a multi-path connection, and in step S717, an RRC Release message is transmitted to the original connection destination.

If the IAB node 102 determined as a new connection destination is a node of higher-order connection with respect to the currently connected IAB node 104 as in Embodiment 1, MIoT requested by the UE 118 is supported, and therefore the connection of the communication path may be switched.

Further, in Embodiments 1 to 2, a single slice is recovered among the IAB nodes 102 to 105. However, in the case where requirements of more than one slice cannot be fulfilled, a slice requested by the largest number of UEs may be provided priority for rescue. Further, if the slice requested by the largest number of UEs cannot be recovered, a new communication path is determined so as to recover a slice requested by the next largest number of UEs.

In the present embodiments, a description has been given of processing for determining a connection destination IAB node based on the received signal intensity of the connection candidate nodes, as shown in FIG. 5. However, the connection destination IAB node may alternatively be determined based on any other type of communication quality. For example, which IAB node is to be a connection destination may be determined based on parameters related to the communication path between the connection candidate node and the IAB donor 101. The parameters may be at least one combination of the maximum communication capacity, the difference between the maximum communication capacity and the currently used communication capacity, the processing load of the connection candidate node, the free buffer capacity of the connection candidate node, and the processing load of the connection candidate node.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority based on Japanese patent application No. 2022-068465 filed April 18, 2022, the entire contents of which are hereby incorporated herein by reference.

## Claims

1. A communication control apparatus for an Integrated Access and Backhaul (IAB) network, the apparatus **characterized by** comprising:
detection means for detecting that a first relay node communicating with a base station of the network over a first communication path no longer fulfills requirements for communication in a specific slice; and
instruction means for providing an instruction to connect to a second relay node that is located on a second communication path fulfilling the requirements for communication in the specific slice and is connectable from the first relay node, in accordance with a result of the detection performed by the detection means.

2. The communication control apparatus according to claim 1, **characterized in that**
the instruction means identifies the second relay node based on a relay node that is not included in the first communication path.

3. The communication control apparatus according to claim 1 or 2, **characterized by** further comprising
storage means for storing a connection candidate node connectable from the first relay node and communication quality between the connection candidate node and the first relay node in association with each other,
wherein if the instruction means identifies a plurality of relay nodes that are connectable from the first relay node and fulfill the requirements for communication in the specific slice, the instruction means identifies a relay node having high communication quality with respect to the first relay node as the second relay node.

4. The communication control apparatus according to any one of claims 1 to 3, **characterized by** further comprising
obtainment means for obtaining a connection candidate list indicating a relay node connectable from the first relay node,
wherein the instruction means identifies a relay node connectable from the first relay node based on the connection candidate list obtained by the obtainment means.

5. The communication control apparatus according to any one of claims 1 to 4, **characterized in that**
in a case where the instruction means is unable to identify the second relay node that is located on the second communication path fulfilling the requirements for communication in the specific slice and is connectable from the first relay node, the instruction means identifies a fourth relay node that is connectable from a third relay node communicating with the base station via the first relay node and fulfills the requirements for communication in the specific slice, and
the instruction means instructs the third relay node to connect to the fourth relay node.

6. The communication control apparatus according to any one of claims 1 to 5, **characterized in that**
in a case where the second communication path fulfills requirements for communication in a slice to be supported by the first relay node, the instruction means instructs the first relay node to disconnect from the first communication path.

7. The communication control apparatus according to any one of claims 1 to 6, **characterized in that**
in a case where the second communication path includes the first communication path, the instruction means instructs the first relay node to disconnect from the first communication path.

8. The communication control apparatus according to any one of claims 1 to 7, **characterized by** further comprising
storage means for storing, for each relay node in the network, fulfilled requirement information indicating requirements fulfillable in communication in a slice supported by the relay node, and
in a case where the fulfilled requirement information stored in the storage means indicates that the first relay node fulfills the requirements for communication in the specific slice, the detection means determines, in response to receiving a slice request for the specific slice from a user equipment (UE) assigned to the specific slice and connected to the first relay node, that the first communication path no longer fulfills the requirements for communication in the specific slice.

9. The communication control apparatus according to any one of claims 1 to 8, **characterized by** further comprising
obtainment means for obtaining, for each relay node in the network, fulfilled requirement information indicating requirements fulfillable in communication in a slice supported by the relay node, in a case where the detection means detects that the first relay node no longer fulfills the requirements for communication in the specific slice,
wherein a relay node having a smallest hop count to the base station is identified from among relay nodes that no longer fulfill the requirements for communication in the specific slice based on the fulfilled requirement information obtained by the obtainment means, and a relay node is determined that is connectable from the identified relay node and fulfills the requirements to be fulfilled for communication in a slice supported by the identified relay node.

10. The communication control apparatus according to any one of claims 1 to 9, **characterized in that**
in a case where the detection means detects that the first communication path no longer fulfills requirements for communication in a plurality of slices, the instruction means provides priority to a slice requested by a larger number of UEs, and provides an instruction to connect to the second relay node that fulfills requirements for communication in the slice that is provided priority.

11. A communication control method to be executed by a communication control apparatus for an Integrated Access and Backhaul (IAB) network, the method **characterized by** comprising:
detecting that a first relay node communicating with a base station of the network over a first communication path no longer fulfills requirements for communication in a specific slice; and
providing an instruction to connect to a second relay node that is located on a second communication path fulfilling the requirements for communication in the specific slice and is connectable from the first relay node, in accordance with a detection result.

12. A program for causing a computer to function as each means of the communication control apparatus according to any one of claims 1 to 10.
